# EUROPEAN PATENT SPECIFICATION

(11) **EP 1 292 181 B1**
(45) Date of publication and mention of the grant of the patent: **07.01.2004**
(21) Application number: 01938426.2
(22) Date of filing: 14.06.2001
(51) Int. Cl.: A01G 13/10

(54) **TREE SHELTERS**
BAUMSCHUTZ
MANCHONS FORESTIERS

(30) Priority: 17.06.2000 GB 0014788
(43) Date of publication of application: 19.03.2003
(73) Proprietor: Hurlstone, Graham Frank, Honiton, Devon EX14 OUQ (GB)
(72) Inventor: Hurlstone, Graham Frank, Honiton, Devon EX14 OUQ (GB)
(74) Representative: Craske, Stephen Allan
(86) International application number: PCT/GB2001/002604
(87) International publication number: WO 2001/097596

(56) References cited:
- AU-B- 637 493
- DE-A- 1 782 101
- GB-A- 769 696
- GB-A- 2 290 691
- GB-A- 2 291 329

## Description

### TECHNICAL FIELD OF THE INVENTION

This invention relates to tree shelters.

### BACKGROUND

Tree shelters are widely used to promote the growth of young trees by providing a favourable micro-climate for growth, shielding the tree from the weather and protecting the growing tree against damage by animals. Most tree shelters are formed of translucent biodegradable plastics such as polypropylene. Although such materials are strong and weatherproof and allow plenty of light to reach the young tree, they are not visually sympathetic to the environment and it takes a long time for the material to blend into the soil at the end of its life.

It has also been proposed to form tree shelters of other more environmentally acceptable materials such as cardboard, but this material has as much shorter life than polypropylene.

AU-B-63 7 493 discloses tree shelters made of a dried slurry which contains waste paper.

The present invention seeks to provide a new and inventive form of tree shelter which is environmentally compatible yet has an acceptable lifespan.

### SUMMARY OF THE INVENTION

The present invention proposes a tree shelter which is formed of paper mill sludge.

Paper mill sludge is a byproduct of the paper industry which is produced in enormous quantities worldwide. It is a benign material, lacking significant amounts of heavy metals, toxic organic compounds or pathogens. At the end if its life the tree shelter is incorporated into the ground with no adverse effects on the environment.

The paper mill sludge may be mixed with a binder. It could also be mixed with a clear resin so that the tree shelter is translucent. Other possible additives include a waterproofing agent and a u.v. blocker. The paper mill sludge can also be mixed with a foaming agent so that the tree shelter is formed with air spaces.

The invention also provides a moulded tree shelter formed with a plurality of ventilation apertures formed during the moulding process.

The invention further provides a tree shelter formed with a plurality of ventilation apertures which are larger at the top end of the tree shelter than at the bottom end.

The invention also provides a moulded tree shelter in which the top end of the tree shelter is formed with a moulded internal curve.

The invention additionally provides a method of making a tree shelter, which includes introducing paper mill sludge into an annular space formed between an outer case and an inner core.

### BRIEF DESCRIPTION OF THE DRAWINGS

The following description and the accompanying drawings referred to therein are included by way of non-limiting example in order to illustrate how the invention may be put into practice. In the drawings:
Figure 1 is a transverse sectional view through a mould for forming a tree shelter in accordance with the invention;
Figure 2 is a side elevation of a tree shelter formed in the mould; and
Figure 3 is a longitudinal section through the top end of the tree shelter, still in the mould.

### DETAILED DESCRIPTION OF THE DRAWINGS

The tree shelter is formed from paper mill sludge, which is can be obtained at little or no cost as a byproduct of paper manufacture. In fact, the disposal of paper mill sludge presents a major environmental problem. The majority is disposed of in landfill sites or dewatered and incinerated, although there have been proposals for using paper mill sludge in growing media for plants. In its raw form the sludge contains a significant amount of water, typically between 40% and 60% by weight, but it can be filtered and dried to yield a grey ash.

The product may be utilised in various ways to form a tree shelter. For example, the dry ash may be mixed with a self-setting polyester or other resinous binder. If the tree shelter is required to be translucent to admit more light to young plants a clear resin may advantageously be used. Wet paper mill sludge or dried ash may be mixed with a binder or setting agent such as polyvinyl acetate (pva) or another suitable organic polymer. A waterproofing agent may be added to slow down the rate of degradation of the tree shelter, and a foaming agent can be included to create an open cellular structure, e.g. for extra heat insulation in cold climates.

The structural integrity of the composition may be increased by adding up to 30% by weight of virgin wood fibres (e.g. spruce). Inert fillers can be incorporated such as china clay, calcium carbonate or talc. It is also advantageous to add a known stabiliser such as titanium dioxide or other u.v. blocker to reduce degradation by ultra violet light. Dyes can be added to the mix if it is desired to produce a tree shelter of a particular colour, e.g. green, brown, black, blue etc.

The tree shelter is formed by moulding the mix into the desired shape.

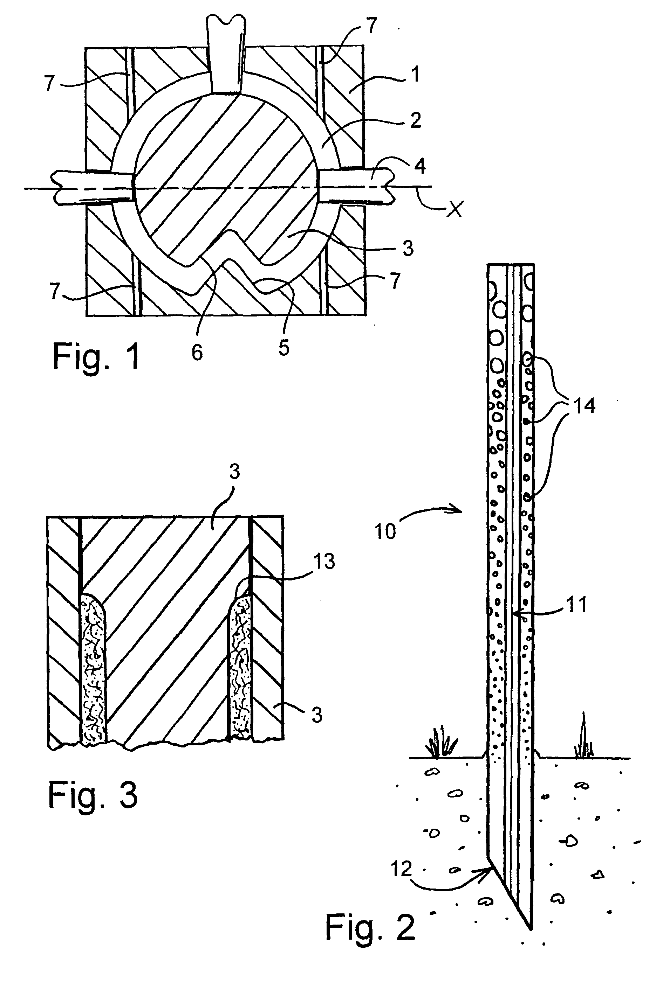

Rotational moulding, extrusion processes or compression moulding can all be used. A preferred form of tree shelter may be produced using the mould shown in **Fig. 1**. The mould has an elongate outer case 1 with a substantially cylindrical cavity 2 containing a fixed cylindrical core 3 located centrally within the cavity 2. An array of retractable pins 4 (slightly tapered) project through the wall of the case 1 into the cavity 2. The wall of the case may have an internal V-section rib 5 which is opposed to a corresponding longitudinal groove 6 on the core 3 to form a channel in the cavity 2.

The mix is injected into the cavity by any suitable means. A mix which contains a resin or another setting agent may be left to set in the mould. Water-based mixes can be consolidated by dewatering the mix, e.g. using application of heat and/or by compression of the mix to express water through small ducts 7, as shown in the drawing. The removal of water allows natural hydrogen bonding to maintain the structural integrity of the tree shelter even where no specific binders are added. The pins 4 are then retracted and the completed tree shelter is ejected from the cavity. To assist removal of the tree shelter, the case may be divided longitudinally into two or more parts, e.g. on the plane *X* which is indicated in the drawing. However, it would also be possible to eject the moulded tree shelter in a longitudinal direction using a cylindrical ram for example.

**Fig. 2** shows a tubular tree shelter which has been formed in the mould. The tree shelter may be translucent or opaque, textured or smooth. When no dyes are added the tree shelter is of a natural grey appearance which is visually unintrusive. The shelter 10 is substantially cylindrical with a longitudinal channel 11 formed in its side wall. The bottom end 12 of the tree shelter can be formed at an angle to the longitudinal axis of the shelter to facilitate insertion to the ground, or it could be normal to the longitudinal axis.

The top end 13 may be formed with a bell mouth to prevent chafing damage to the young tree when it emerges from the upper end of the shelter. However, a projecting top end may be subject to damage which in turn risks damaging tender growth. For this reason, it is preferred to mould the top end of the shelter as shown in **Fig. 3**, with the external surface being parallel and the internal surface being formed with a smooth outward curve 13. The shape of the top end is created by shaping the case 1 and core 3, as shown.

Returning to **Fig. 2**, in a preferred form of the tree shelter the wall has an array of holes 14 formed by the retractable pins 4. This is more economical than punching holes in the wall which wastes material. Another economical way of forming the holes would be to provide plugs of sacrificial material in the mould which is subsequently removed to leave holes in the wall of the shelter. For example, wax plugs could be used which are melted upon removal from the mould. The holes allow light into the shelter and allow air to circulate freely around the growing tree to reduce the risk of fungal diseases. It is particularly preferred that the holes towards the top of the shelter should be larger than those at the bottom, as shown, so that the amount of light increases as the tree grows. Parts of the tree can also emerge from the holes at the top as the tree grows. The smaller holes at the bottom afford increased protection when the tree is smaller and reduce the risk of vermin entering the shelter.

The tree shelter can be placed over a newly planted tree seedling and secured to a tree stake by means of ties. The stake is located in the channel 11, and the ties can be inserted through holes in the wall of the shelter and secured around the stake.

## Claims

1. A tree shelter which is formed of paper mill sludge.

2. A tree shelter according to Claim 1, which is formed with a plurality of moulded ventilation apertures (14).

3. A tree shelter according to Claim 2, in which the apertures are larger at the top end of the tree shelter than at the bottom end.

4. A tree shelter according to Claim 1, in which the top end of the tree shelter is formed with a moulded internal curve (13).

5. A tree shelter according to Claim 1, in which the paper mill sludge is mixed with a binder.

6. A tree shelter according to Claim 1, in which the paper mill sludge is mixed with a clear resin so that the tree shelter is translucent.

7. A tree shelter according to Claim 1, in which the paper mill sludge is mixed with a waterproofing agent

8. A tree shelter according to Claim 1, in which the paper mill sludge is mixed with a foaming agent so that the tree shelter is formed with air spaces.

9. A tree shelter according to Claim 1, in which the paper mill sludge is mixed with a u.v. blocker.

10. A method of making a tree shelter, which includes introducing paper mill sludge into an annular space formed between an outer case (1) and an inner core (3).

## Patentansprüche

1. Baumschutz, der aus Papierschlamm hergestellt ist.

2. Baumschutz nach Anspruch 1, der mit einer Mehrzahl von eingeformten Belüftungsöffnungen (14) hergestellt ist.

3. Baumschutz nach Anspruch 2, bei dem die Öffnungen am oberen Ende des Baumschutzes größer als am unteren Ende sind.

4. Baumschutz nach Anspruch 1, bei dem das obere Ende des Baumschutzes mit einer eingeformten inneren Krümmung (13) hergestellt ist.

5. Baumschutz nach Anspruch 1, bei dem der Papierschlamm mit einem Bindemittel gemischt ist.

6. Baumschutz nach Anspruch 1, bei dem der Papierschlamm mit einem klaren Harz gemischt ist, so dass der Baumschutz lichtdurchlässig ist.

7. Baumschutz nach Anspruch 1, bei dem der Papierschlamm mit einem Imprägnierungsmittel gemischt ist.

8. Baumschutz nach Anspruch 1, bei dem der Papierschlamm mit einem Schäummittel gemischt ist, so dass der Baumschutz mit Lufträumen gebildet ist .

9. Baumschutz nach Anspruch 1, bei dem der Papierschlamm mit einem Ultraviolett-Blocker gemischt ist.

10. Verfahren zur Herstellung eines Baumschutzes, bei dem Papierschlamm in einen ringförmigen Raum eingeführt wird, der zwischen einer äußeren Hülle (1) und einem inneren Kern (3) gebildet ist.

## Revendications

1. Manchon de protection pour arbres qui est à base de boues résiduelles de papeterie.

2. Manchon de protection selon la revendication 1, qui comporte une pluralité d'ouvertures de ventilation moulées (14) .

3. Manchon de protection selon la revendication 2, dans lequel les ouvertures sont plus grandes à l'extrémité supérieure du manchon de protection qu'à l'extrémité inférieure.

4. Manchon de protection selon la revendication 1, dans lequel l'extrémité supérieure du manchon de protection comporte une courbure interne moulée (13).

5. Manchon de protection selon la revendication 1, dans lequel les boues résiduelles de papeterie sont mélangées avec un liant.

6. Manchon de protection selon la revendication 1, dans lequel les boues résiduelles de papeterie sont mélangées avec une résine transparente de telle sorte que le manchon de protection soit translucide.

7. Manchon de protection selon la revendication 1, dans lequel les boues résiduelles de papeterie sont mélangées avec un agent imperméabilisant.

8. Manchon de protection selon la revendication 1, dans lequel les boues résiduelles de papeterie sont mélangées avec un agent porogène de telle sorte que le manchon de protection comporte des espaces d'air.

9. Manchon de protection selon la revendication 1, dans lequel les boues résiduelles de papeterie sont mélangées avec un agent de blocage du rayonnement ultraviolet.

10. Procédé de fabrication d'un manchon de protection pour arbres, qui comprend l'introduction de boues résiduelles de papeterie dans un espace annulaire formé entre une enveloppe externe (1) et un noyau interne (3).
